Europäisches Patentamt

European Patent Office

Office européen des brevets

(19)

(11) Veröffentlichungsnummer: **0 214 553 B1**

(12) **EUROPÄISCHE PATENTSCHRIFT**

(45) Veröffentlichungstag der Patentschrift: **01.04.92**

(51) Int. Cl.⁵: **B60H 1/32**, B62D 35/00

(21) Anmeldenummer: **86111860.2**

(22) Anmeldetag: **27.08.86**

(54) **Klimaanlage für ein Kraftfahrzeug.**

(30) Priorität: **30.08.85 DE 3531045**

(43) Veröffentlichungstag der Anmeldung:
**18.03.87 Patentblatt 87/12**

(45) Bekanntmachung des Hinweises auf die
Patenterteilung:
**01.04.92 Patentblatt 92/14**

(84) Benannte Vertragsstaaten:
**BE DE FR GB IT NL**

(56) Entgegenhaltungen:
CH-A- 541 451      DE-U- 6 929 540
US-A- 2 475 841    US-A- 2 799 143
US-A- 2 869 333    US-A- 4 098 093
US-A- 4 144 719    US-A- 4 217 764

(73) Patentinhaber: **KONVEKTA AKTIENGESELL-
SCHAFT
Am Nordbahnhof 5
W-3578 Schwalmstadt 2(DE)**

(72) Erfinder: **Köhler, Jürgen, Dr. Ing.
Steingasse 18
W-3578 Schwalmstadt 1(DE)**

(74) Vertreter: **LOUIS, PÖHLAU, LOHRENTZ & SE-
GETH
Kesslerplatz 1 Postfach 3055
W-8500 Nürnberg-1(DE)**

**Beschreibung**

Die Erfindung betrifft eine Klimaanlage,insbesondere zur Anordnung auf dem Dach eines Kraftfahrzeuges, mit einem Verdampfer und einem Kondensator, die in einem auf dem Dach zu montierenden Gehäuse angeordnet und durch Leitungen miteinander und mit einem Kompressor verbunden sind, der mit einer Antriebseinrichtung antreibbar ist.

Derartige Klimaanlagen für Kraftfahrzeuge sind auf dem Dach des Kraftfahrzeuges fest montiert und mit einer Antriebseinrichtung beispielsweise in Form eines Elektromotors versehen, der aus dem 220 V - Stromnetz versorgt werden muss. Das bedeutet, dass derartige bekannte Klimaanlagen nicht während der Fahrt sondern nur während des Stillstandes des Kraftfahrzeuges verwendbar sind. Deshalb werden solche Klimaanlagen insbesondere bei Wohnmobilen angewandt.

Für Lastkraftwagen und Omnibusse sind Klimaanlagen bekannt, bei denen die Antriebseinrichtung für den Kompressor und der Kompressor im Motorraum angeordnet sind, während der Verdampfer und der Kondensator in einem auf dem Dach des Fahrzeugs montierten Gehäuse vorgesehen sind. Bei einer solchen Anordnung ist es erforderlich, die im Motorraum befindlichen Teile der Klimaanlage mit den im Gehäuse befindlichen Teilen über Rohrleitungen zu verbinden. Diese Rohrleitungen sind relativ lang, so dass sich vergleichsweise grosse Druck- und Reibungsverluste ergeben. Durch derartige Verluste lassen sich mit einer solchen bekannten Klimaanlage nur kleine Leistungsziffern erreichen, bzw. muss die Klimaanlage überdimensioniert werden. Das ist bei Lastkraftwagen oder Omnibussen nicht erheblich, weil dort grosse Motorleistungen zur Verfügung stehen, bei Personenkraftfahrzeugen mit solchen bekannten Klimaanlagen jedoch nur sehr bedingt einsetzbar.

Aus der CH-A 541 451 ist eine Klimaanlage zur Anordnung am Dach eines Kraftfahrzeugs bekannt, mit einem Verdampfer und einem Kondensator, die durch Leitungen miteinander und mit einem Kompressor verbunden sind, der mit einer Antriebseinrichtung antreibbar ist, wobei der Verdampfer, der Kondensator und der Kompressor mit der Antriebseinrichtung in einem gemeinsamen Gehäuse angeordnet sind, das mit Befestigungselementen an einer Dachöffnung des Fahrzeugs loslösbar befestigt ist, und die Antriebseinrichtung für den Kompressor ein aus einer Stromquelle des Kraftfahrzeugs zu speisender Elektromotor ist.

Der vorliegenden Erfindung liegt die Aufgabe zugrunde, eine Klimaanlage der eingangs genannten Art zu schaffen, die jederzeit mit einen kleinen Energiebedarf betrieben werden kann und die auch nachträglich an jedem ein Schiebe- oder Sonnendach aufweisenden Kraftwagen installiert werden kann.

Diese Aufgabe wird erfindungsgemäss durch die kennzeichnenden Merkmale des Anspruchs 1 gelöst.

Durch die Anordnung auch des Kompressors und der Antriebseinrichtung für den Kompressor ergibt sich eine komplette Klimaanlage, die auch nachträglich auf dem Dach eines Kraftfahrzeuges befestigt und in der kühleren Jahreszeit vom Dach auch wieder abmontiert werden kann. Diese Montage bzw. Demontage wird durch die lösbaren Befestigungsmittel erzielt, die beispielsweise wie die Befestigungsmittel eines Skiträgers oder eines Dachgepäckträgers funktionieren. Ein weiterer Vorteil der erfindungsgemässen kompakten Klimaanlage besteht darin, dass die Rohrleitungen nur innerhalb des Gehäuses der Klimaanlage verlaufen und vergleichsweise kurz sind, so dass die Druck- und Reibungsverluste gering sind.Damit ist es möglich, mit der erfindungsgemässen Klimaanlage mit einem relativ geringen Energieaufwand einen wesentlichen Beitrag zur Verbesserung des Klimas im Kraftfahrzeug und damit zur Erhöhung des Wohlbefindens der Insassen des Kraftfahrzeuges zu erzielen. Da bei Verwendung einer Klimaanlage gemäss der Erfindung die gekühlte Luft zuerst in den Kopfraum eintritt, ergibt sich eine besonders gute Effektivität im Vergleich zu den bisherigen Pkw-Klimaanlagen, bei denen die gekühlte Luft im Bereich des Armaturenbrettes austritt. Hierdurch kann eine weitere Verminderung der erforderlichen Kälteleistung erreicht werden.

Es hat sich als zweckmässig erwiesen, dass das Gehäuse in seinem Inneren durch eine Trennwand in zwei Teilräume unterteilt ist, dass der in Fahrtrichtung vordere Teilraum den Verdampfer und ein Gebläse aufweist und stirnseitig mit einer Einlassöffnung für Umgebungsluft oder Innenraumluft und an seiner Unterseite mit mindestens einer Auslassöffnung für die abgekühlte Luft versehen ist, und dass der zweiteTeilraum den Kondensator und den Kompressor mit der Antriebseinrichtung aufnimmt und mit einer Einlassöffnung und einer Auslassöffnung für die Umgebungsluft versehen ist. Durch die Unterteilung des Gehäuses in zwei Teilräume wird die abgekühlte Luft aus der Umgebung des Verdampfers optimal zur Klimatisierung des Innenraumes des Kraftfahrzeuges ausgenutzt. Diese optimale Ausnutzung der abgekühlten Luft aus der Umgebung des Verdampfers wird noch durch das im ersten Teilraum vorgesehene Gebläse,das in Stufen oder stufenlos regelbar sein kann, unterstützt. Die Anzahl der an der Unterseite des Gehäuses vorgesehenen Auslassöffnung für die abgekühlte Luft ist von der Grösse des Innenraumes des Kraftfahrzeuges abhängig. Durch die Anordnung der im ersten Teilraum vorgesehenen Einlassöffnung für die Umgebungsluft an der Stirnseite des Gehäuses wird der an sich bekannte Vorteil erzielt,dass während der Fahrt des Kraftfahrzeuges die Strömung der Umgebungsluft ausgenutzt werden kann. Dadurch, dass der zweite Teilraum den Kondensator und den Kompressor mit der Antriebseinrichtung aufnimmt und mit einerEinlassöffnung und mit einer Auslassöffnung für die Umgebungsluft versehen ist, wird der Vorteil erzielt, dass der Kompressor und die Antriebseinrichtung für den Kompressor während der Fahrt der Umgebungsluft ausgesetzt sind und gekühlt werden.

Um auch während eines Stillstandes des Kraftfahrzeuges eine ausreichende Kühlung des Kompressors und dem Antriebseinrichtung für den Kompressor zu gewährleisten, ist bei einer Weiterbildung der erfindungsgemässen Klimaanlage in der Einlassöffnung des zweitenTeilraumes ein Ventilator angeordnet. Mit diesem Ventilator ist eine Zwangskühlung des Kompressors und der Antriebseinrichtung für den Kompressor und ausserdem eine Zwangskühlung des Kondensators der Klimaanlage möglich.

Bei der erfindungsgemässen Klimaanlage weist das Gehäuse an seiner Unterseite einen umlaufendenDichtungsrand auf, und sind die lösbaren Befestigungsmittel zur Befestigung der Klimaanlage am Dach des Kraftfahrzeuges als Klemmvorrichtung ausgebildet. Durch eine derartige Ausbildung ist eine dichte Verbindung der kompakten Klimaanlage mit ihrem Gehäuse am Dach, d.h. über dem Sonnen- bzw. dem Schiebedach eines Kraftfahrzeuges möglich. Der Dichtungsrand ist dabei derart nachgiebig ausgebildet, dass die erfindungsgemässe Klimaanlage an die verschiedenen Dachformen unterschiedlicher Kraftfahrzeuge anpassbar ist, so dass die erfindungsgemässe kompakte Klimaanlage für alle gängigen Kraftfahrzeugtypen verwendbar ist. Dabei ist es nur erforderlich, dass das Kraftfahrzeug mit einem Sonnen- oder Schiebedach versehen ist, über dem die Klimaanlage abnehmbar befestigt werden kann.

Bei einer Weiterbildung der erfindungsgemässen Klimaanlage kann die Deckfläche des Gehäuses in einen Windabweiser übergehen. Eine derartige Ausbildung der erfindungsgemässen Klimaanlage ist insbesondere für Kraftfahrzeuge vorgesehen, an die beispielsweise für Urlaubsfahrten ein Wohnwagen angehängt werden soll. Der Windabweiser kann dabei an die erfindungsgemässe Klimaanlage einteilig oder als separates Teil angeschlossen sein.

Es hat sich als zweckmässig erwiesen,dass die Antriebseinrichtung für den Kompressor der Klimaanlage ein Elektromotor ist, der aus einer Stromquelle des Kraftfahrzeuges gespeist wird. Um die von der Klimaanlage aufgenommene Stromstärke auf einer zulässigen Höhe zu halten,ist es vorteilhaft,wenn die Stromquelle eine Nennspannung von 24 V besitzt. Sofern das Bordnetz des Fahrzeuges auf 24 V ausgelegt ist, kann im Normalfall ein direkter Anschluss der Klimaanlage an das Bordnetz erfolgen. Für eine derartige Antriebseinrichtung ist es nämlich nur erforderlich, die auf dem Dach des Kraftfahrzeuges montierte Klimaanlage mittels einer elektrischen Verbindungsleitung mit der Stromquelle des Kraftfahrzeuges zu verbinden, was einen minimalen Montageaufwand und Platzbedarf bedingt. Selbstverständlich ist es auch möglich,dass die Antriebseinrichtung ein Pneumatikmotor ist, der an einen Luftkompressor angeschlossen ist. Dieser Luftkompressor kann über einen Keilriemenantrieb mit dem Fahrzeugmotor verbunden sein.

Weitere Einzelheiten, Merkmale und Vorteile ergeben sich aus der nachfolgenden Beschreibung einer in der Zeichnung dargestellten erfindungsgemässen Klimaanlage. Es zeigen:

Fig. 1 eine Draufsicht auf eine Klimaanlage;

Fig. 2 eine Seitenansicht einer Klimaanlage;

Fig. 3 die Anordnung einer Klimaanlage auf dem Dach eines Kraftfahrzeuges, und

Fig. 4 dieAnordnung einer mit einem Windabweiser ausgebildeten Klimaanlage auf dem Dach eines abschnittsweise dargestellten Kraftfahrzeuges, an das ein abschnittweise dargestellter Wohnwagen angehängt ist.

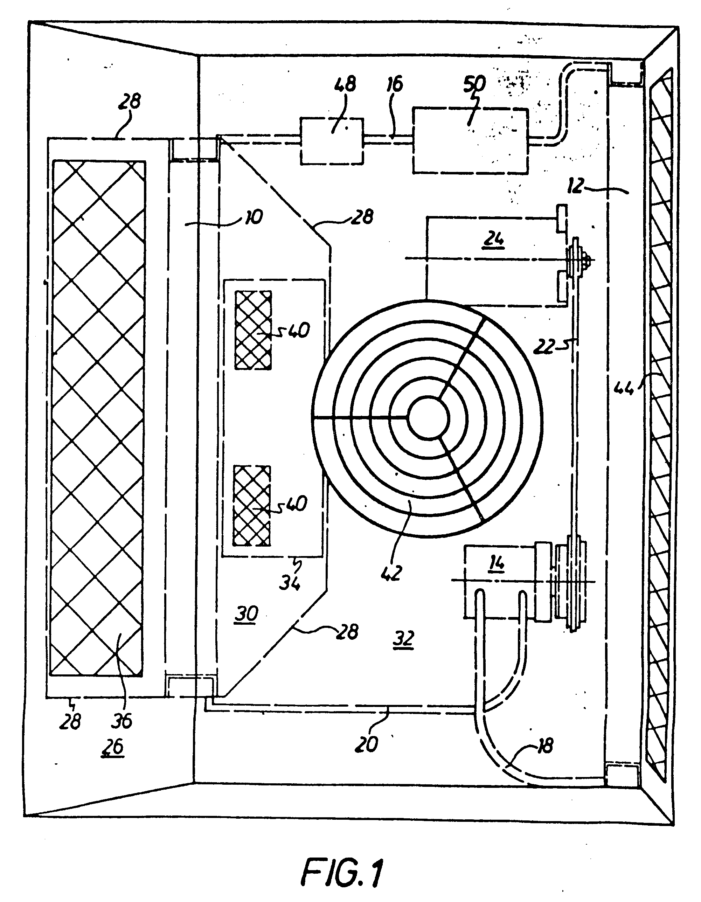

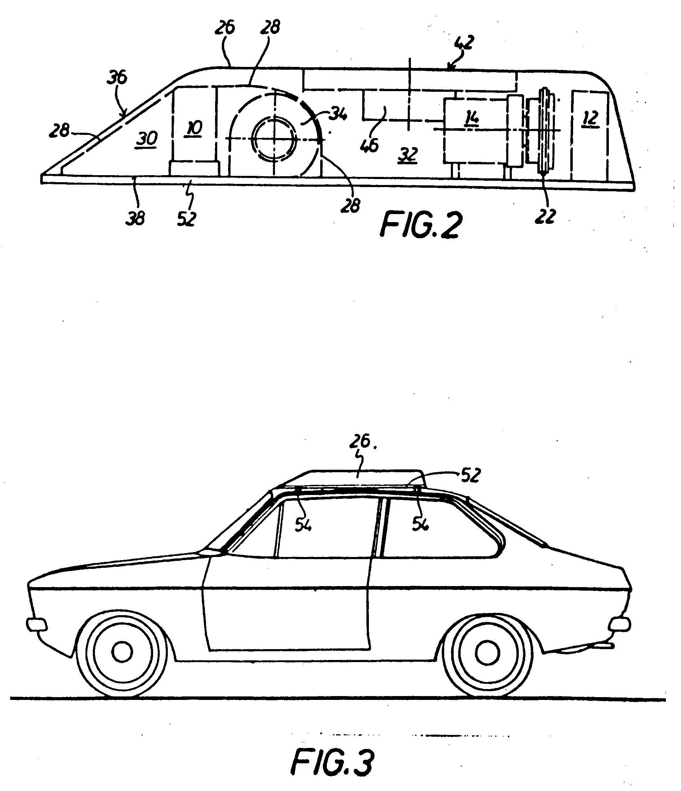

Die Figuren 1 und 2 zeigen eine Klimaanlage, die insbesondere zur Anordnung auf dem Dach eines Kraftfahrzeuges vorgesehen ist, und die einen Verdampfer 10, einen Kondensator 12 und einen Kompressor 14 aufweist. Der Verdampfer 10, der Kondensator 12 und der Kompressor 14 sind mittels Leitungen 16, 18, 20 miteinander fluidisch verbunden. Bei diesen Leitungen kann es sich um starre Rohrleitungen oder um flexible Schlauchleitungen handeln. Der Kompressor 14 ist über einen Keilriemen 22 mit einer Antriebseinrichtung 24 verbunden, bei der es sich im dargestellten Ausführungsbeispiel um einen Elektromotor handelt. Der Elektromotor 24 wird vorzugsweise aus einer 24 V-Stromquelle, gegebenenfalls dem Bordnetz des Kraftfahrzeuges gespeist. Die Klimaanlage weist ein Gehäuse 26 auf, in welchem die zuletzt genannten Bauteile 10 bis 24 angeordnet sind.Erfindungsgemäss sind also nicht nur der Verdampfer 10 und der Kondensator 12 im Gehäuse 26 der Klimaanlage angeordnet, sondern auch der Kompressor 14 und die Antriebseinrichtung 24 für den Kompressor. Das Gehäuse 26 der Klimaanlage ist in seinem Inneren durch eine Trennwand 28 in zwei Teilräume 30 und 32 unterteilt, wobei der in Fahrtrichtung vordere Teilraum 30 den Verdampfer 10 und ein Gebläse 34 aufweist. Der vordere Teilraum 30 ist stirnseitig mit einer Einlassöffnung 36 für Umgebungsluft und an seiner Unterseite 38 mit einer im wesentlichen unterhalb der Einlassöffnung 36 in Fig. 1 liegenden Einlassöffnung für Luft aus dem Innenraum des Fahrzeuges versehen. An der Unterseite des Teilraumes 28 sind ausserdem zwei Auslassöffnungen 40 vorgesehen, durch die die in den Teilraum 30 einströmende und in der Umgebung des Verdampfers 10 abgekühlte Umgebungsluft oder Innenraumluft mittels des Gebläses 34 in den Innenraum des Kraftfahrzeuges geführt wird.

Um Staubpartikel und Geruchsstoffe an einem Eindringen in den Innenraum des Kraftfahrzeuges zu hindern,sind die Einlassöffnungen 36 und/oder die Auslassöffnungen 40 mit an sich bekannten Filtern versehen. Der zweite Teilraum 32 des Gehäuses 26 der erfindungsgemässen Klimaanlage nimmt den Kondensator 12 und den Kompressor 14 mit der Antriebseinrichtung 24 auf, wie aus den Fig. 1 und 2 deutlich ersichtlich ist. Der zweite Teilraum 32 ist mit einer Einlassöffnung 42 und mit einerAuslassöffnung 44 für die Umgebungsluft ausgebildet. Sowohl die Einlassöffnung 42 als auch die Auslassöffnung 44 sind durch Berührungsschutzgitter abgedeckt, wie aus Fig. 1 deutlich ersichtlich ist. In der Einlassöffnung 42 des zweiten Teilraumes 32 ist ein Ventilator 46 angeornet, der insbesondere während eines Stillstandes des eine erfindungsgemässe Klimaanlage verwendenden Kraftfahrzeuges eine Kühlung sowohl des Kondensators 12 als auch des Kompressors 14 und der Antriebseinrichtung 24 für den Kompressor bewirkt.

Mit der Bezugsziffer 48 ist in Fig.1 ein in die Leitung 16 eingeschalteter Trockner bezeichnet und mit der Bezugsziffer 50 ein dem Trockner 48 nachgeschalteter Sammler.

Wie aus den Fig. 2 und 3 ersichtlich ist, weist das Gehäuse 28 der Klimaanlage an seiner Unterseite 38 einen Dichtungsrand 52 auf, der um den Rand der Unterseite 38 umläuft. Dieser Dichtungsrand 52 ist derartig elastisch nachgiebig, dass er sich an jede Dachform eines Kraftfahrzeuges anpasst, so dass die erfindungsgemässe Klimaanlage an jedem gängigen Kraftfahrzeugtyp problemlos und dicht angebracht werden kann. Zur Anordnung der Klimaanlage auf dem Dach eines Kraftfahrzeuges dienen an sich bekannte Befestigungselemente 54 (s.Fig.3 u. 4),wie sie beispielsweise auch von Skiträgern,Dachgepäckträgern,Trägern für Surfbretter,Dachträger für Fahrräder o.dgl.bekannt sind.

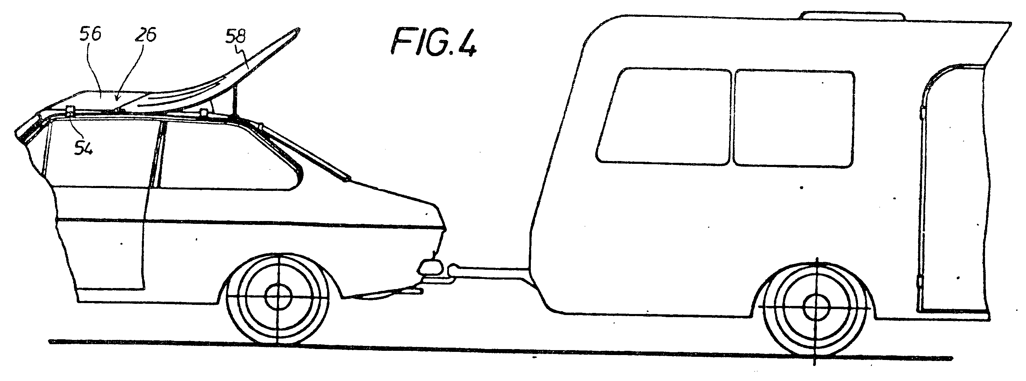

Wie aus Fig. 4 ersichtlich ist, kann die Deckfläche 56 des Gehäuses 28 der Klimaanlage in einen Windabweiser 58 übergehen. Ein derartiger Windabweiser ist insbesondere dann von Vorteil, wenn mit einem eine erfindungsgemässe Klimaanlage aufweisenden Kraftfahrzeug ein Wohnwagen gezogen werden soll.

Mit der erfindungsgemässen Klimaanlage, die für Kraftfahrzeuge vorgesehen ist,die ein abnehmbares Dach oder ein Schiebedach aufweisen,über welchem die erfindungsgemässe Klimaanlage mit Hilfe der einfach zu betätigenden Befestigungsmittel angeordnet werden kann, wird mit einem vergleichsweise geringen Energieaufwand für die Klimaanlage ein wesentlicher Beitrag zur Verbesserung des Klimas im Inneren des Kraftfahrzeuges und somit zum Wohlbefinden der Insassen des Kraftfahrzeuges und damit zur Fahrsicherheit geleistet.Das macht sich insbesondere bei langen Urlaubsfahrten,bei Stadtfahrten und vor allem bei Stausituationen vorteilhaft bemerkbar.

Die erfindungsgemässe Klimaanlage ist insbesondere für Kraftfahrzeuge mit oder ohne Wohnwagen vorgesehen, da derartige Kraftfahrzeuge für Urlaubsfahrten beispielsweise mit weiter auskragenden Rückspiegeln,mit Windabweisern od.dgl. versehen werden müssen.Bei der Durchführung der Arbeiten zur Anbringung längerer Rückspiegel, Windabweisern u.dgl. ist es auch möglich, die erfindungsgemässe Klimaanlage auf dem ein abnehmbares oder ein Schiebedach aufweisenden Kraftfahrzeug in einfacher Weise anzubringen. Um während der kälteren Jahreszeit das Gewicht und den windwiderstand des Kraftfahrzeuges zu reduzieren, ist es einfach möglich, die Klimaanlage vom Dach des Kraftfahrzeuges abzumontieren.

**Patentansprüche**

1. Klimaanlage, zur Anordnung am Dach eines Kraftfahrzeuges, mit einem Verdampfer (10) und einem Kondensator (12), die durch Leitungen (16; 18, 20) miteinander und mit einem Kompressor (14) verbunden sind, der mit einer Antriebseinrichtung (24) antreibbar ist, wobei der Verdampfer (10),der Kondensator (12) und der Kompressor (14) mit der Antriebseinrichtung (24) in einem gemeinsamen Gehäuse (26) angeordnet sind, das mit Befestigungselementen (54) an einer Dachöffnung des Kraftfahrzeuges loslösbar befestigbar ist, und die Antriebseinrichtung (24) für den Kompressor ein aus einer Stromquelle des Kraftfahrzeugs zu speisender Elektromotor ist **dadurch gekennzeichnet,** dass die Befestigungselemente (54) an sich von Dachskiträgern bzw. Dachgepäckträgern bekannte Klemmvorrichtungen sind, dass das Gehäuse (26) an seiner Unterseite (38) einen umlaufenden Dichtungsrand (52) aufweist, dass die Klimaanlage zur Anordnung auf dem Dach des Kraftfahrzeugs über der Schiebe- bzw. Sonnendachöffnung vorgesehen ist und mit dem Dichtungsrand (52) am Rand der Schiebe- bzw. Sonnendachöffnung abdichtend anliegt, dass das Gehäuse (26) in seinem Inneren durch eine Trennwand (28) in zwei Teilräume (30, 32) unterteilt ist, dass der in Fahrtrichtung vordere Teilraum (30) den Verdampfer (10) und ein Gebläse (34) aufweist und stirnseitig mit einer Einlassöffnung (36) für Umgebungsluft oder Innenraumluft und an seiner Unterseite (38) mit mindestens einer Auslassöffnung (40) für die abgekühlte Luft versehen ist, und dass der zweite Teilraum (32) den Kondensator (12) und den Kompressor (14) mit der Antriebseinrichtung (24) aufnimmt und mit einer Einlassöffnung (42) und mit einer Auslassöffnung (44) für die Umgebungsluft versehen ist.

2. Klimaanlage nach Anspruch 1,
   **dadurch gekennzeichnet,**
   dass in der Einlassöffnung (42) des zweiten Teilraumes (32) ein Ventilator (46) angeordnet ist.

3. Klimaanlage nach Anspruch 1 oder 2,
   **dadurch gekennzeichnet,**
   dass die Deckfläche (56) des Gehäuses (26) in einen Windabweiser (58) übergeht.

## Claims

1. An air conditioning installation for arranging on the roof of a motor vehicle, comprising an evaporator (10) and a condenser (12) which are connected by conduits (16; 18, 20) to each other and to a compressor (14) which is drivable by a drive device (24), wherein the evaporator (10), the condenser (12) and the compressor (14) with the drive device (24) are arranged in a common housing (26) which can be releasably fixed by fixing elements (14) to a roof opening or the motor vehicle and the drive device (24) for the compressor is an electric motor to be powered from a power source of the motor vehicle, characterised in that the fixing elements (54) are clamping devices known per se from roof ski racks or roof luggage racks, that the housing (26) had a peripheral sealing edge (52) at its underside (38), that the air conditioning installation is intended to be arranged on the roof of the motor vehicle over the sliding or sun roof opening and bears sealingly with the sealing edge (52) against the edge of the sliding or sun roof opening, that the housing (26) is divided in its interior into two portions (30, 32) by a partition (28), that the portion (30) which is the front portion in the direction of travel has the evaporator (10) and a blower (34) and is provided at its front end with an inlet opening (36) for ambient air or interior air and is provided at its underside (38) with at least one outlet opening (40) for the cooled air, and that the second portion (32) accommodates the condenser (12) and the compressor (14) with the drive device (24) and is provided with an inlet opening (42) and an outlet opening (44) for the ambient air.

2. An air conditioning installation according to claim 1 characterised in that a fan (46) is arranged in the inlet opening (42) of the second portion (32).

3. An air conditioning installation according to claim 1 or claim 2 characterised in that the top surface (56) of the housing (26) goes into an air flow deflector (58).

## Revendications

1. Installation de conditionnement d'air destinée à être agencée sur le toit d'un véhicule automobile, comportant un évaporateur (10) et un condenseur (12) qui, par des conduites (16; 18, 20), sont reliés l'un à l'autre et à un compresseur (14) pouvant être entraîné par un dispositif d'entraînement (24), l'évaporateur (10), le condenseur (12) et le compresseur (14) avec le dispositif d'entraînement (24) étant agencés dans une enceinte commune (26) qui, par des éléments de fixation (54), peut être amoviblement fixée à une ouverture du toit du véhicule automobile, le dispositif d'entraînement (24) du compresseur étant un moteur électrique destiné à être alimenté par une source de courant du véhicule automobile, caractérisée par le fait que les éléments de fixation (54) sont des dispositifs de serrage connus par des dispositifs porte-skis ou encore par des galeries porte-bagage, par le fait que l'enceinte (26) présente en son côté dessous (38) un bord d'étanchéité périmétrique (52), par le fait que l'installation de climatisation est prévue pour être agencée sur le toit du véhicule, par-dessus l'ouverture de toit coulissant ou l'ouverture d'ensoleillement et s'applique avec étanchéité, par ledit bord d'étanchéité (52), contre le bord de ladite ouverture de toit coulissant ou ouverture d'ensoleillement, par le fait que l'intérieur de l'enceinte (26) est divisé en deux volumes partiels (30, 32) par une cloison (28), par le fait que le volume partiel (30) situé en avant dans le sens de la marche présente l'évaporateur (10) et une soufflante (34) et est muni frontalement d'une ouverture d'admission (36) pour de l'air ambiant ou de l'air du volume intérieur et est muni, en son côté dessous (38), d'au moins une ouverture de sortie (40) pour l'air refroidi, et par le fait que le deuxième volume partiel (32) reçoit le condenseur (12) et le compresseur (14) avec le dispositif d'entraînement (24) et est muni d'une ouverture d'admission (42) et d'une ouverture de sortie (44) pour l'air ambiant.

2. Installation de conditionnement d'air selon revendication 1,
caractérisée
par le fait qu'un ventilateur (46) est agencé dans l'ouverture d'admission (42) du deuxième volume partiel (32).

3. Installation de conditionnement d'air selon revendication 1 ou 2,
caractérisée
par le fait que la surface de dessus (56) de l'enceinte (26) se raccorde à un déflecteur (58).

FIG.1

FIG.2

FIG.3

FIG.4

EP 0 214 553 B1